# FASCICULE DE BREVET EUROPEEN

(11) **EP 3 748 529 B1**
(45) Date de publication et mention de la délivrance du brevet: **26.07.2023**
(21) Numéro de dépôt: 20177713.3
(22) Date de dépôt: 01.06.2020
(51) Int. Cl.: G06K 7/10, H02J 7/02, H04B 5/00

(54) **RECHARGE DE DISPOSITIF NFC**
WIEDERAUFLADEN EINES NFC-GERÄTS
CHARGER FOR NFC DEVICE

(30) Priorité: 03.06.2019 FR 1905860
(43) Date de publication de la demande: 09.12.2020
(73) Titulaire: STMicroelectronics (Rousset) SAS, 13790 Rousset (FR)
(72) Inventeur: TRAMONI, Alexandre, 83330 LE BEAUSSET (FR)
(74) Mandataire: Cabinet Beaumont

(56) Documents cités:
- US-A1- 2004 256 460
- US-A1- 2013 119 929
- US-A1- 2013 127 410
- US-A1- 2018 358 834
- US-A1- 2019 132 431

## Description

### Domaine technique

La présente description concerne de façon générale les circuits électroniques et, plus particulièrement, les transpondeurs électromagnétiques ou étiquettes électroniques (TAG). La présente description s'applique plus particulièrement aux dispositifs électroniques intégrant un circuit de communication en champ proche (NFC - Near Field Communication) et à la recharge d'un dispositif par champ proche.

### Technique antérieure

Les systèmes de communication à transpondeurs électromagnétiques sont de plus en plus fréquents, en particulier depuis le développement des technologies de communication en champ proche (NFC - Near Field Communication) .

Ces systèmes exploitent un champ électromagnétique radiofréquence généré par un dispositif (terminal ou lecteur) pour communiquer avec un autre dispositif (carte).

Dans les systèmes récents, un même dispositif NFC peut opérer en mode carte ou en mode lecteur (par exemple dans le cas d'une communication en champ proche entre deux téléphones mobiles). Il est alors fréquent que les dispositifs soient alimentés par batteries. La batterie d'un dispositif NFC peut alors être rechargeable en champ proche, c'est-à-dire en utilisant son antenne de communication en champ proche. Cette recharge est effectuée depuis un autre dispositif NFC "chargeur" fonctionnant sur batterie ou tirant son énergie d'un raccordement à un réseau électrique ou à un dispositif d'alimentation.

Le document US 2019/132431 décrit une station mémoire pour sauvegarder des données et recharger des dispositifs mobiles.

Le document US 2013/119929 décrit un chargeur inductif multidimensionnel et ses applications.

Le document US 2018/358834 décrit un système et un procédé pour alimenter ou charger des récepteurs ou dispositifs de faible volume ou de faible surface.

Le document US 2013/127410 décrit un appareil et un procédé pour contrôler la puissance de charge d'un récepteur d'énergie sans fil.

Le document US 2004/256460 décrit un lecteur en circuit intégré sans contact comprenant un mode de veille active à faible consommation.

### Résumé de l'invention

Il existe un besoin d'amélioration des processus de recharge de dispositifs NFC par champ proche.

Un mode de réalisation pallie tout ou partie des inconvénients des dispositifs NFC connus et de leur système de rechargement en champ proche.

Un mode de réalisation prévoit un procédé de détection tel que défini dans les revendications.

Un mode de réalisation prévoit un circuit de détection tel que défini dans les revendications.

Un mode de réalisation prévoit un dispositif NFC tel que défini dans les revendications.

Un mode de réalisation prévoit un produit programme d'ordinateur tel que défini dans les revendications.

### Brève description des dessins

Ces caractéristiques et avantages, ainsi que d'autres, seront exposés en détail dans la description suivante de modes de réalisation et de modes de mise en oeuvre particuliers faite à titre non limitatif en relation avec les figures jointes parmi lesquelles :
la figure 1 est une représentation, très schématique et sous forme de blocs, d'un exemple de système de communication en champ proche du type auquel s'appliquent, à titre d'exemple, des modes de réalisation décrits ;
la figure 2 illustre, par un chronogramme, un exemple de processus de détection, par un dispositif en mode lecteur en veille, d'un dispositif en mode carte ;
la figure 3 illustre, sous forme de blocs et de façon très schématique, la présence d'un objet étranger dans un champ électromagnétique de recharge d'un dispositif NFC ;
la figure 4 illustre, sous la forme d'un chronogramme, un exemple de variation du courant tiré sur le champ électromagnétique d'un chargeur en fonction du niveau de charge de la batterie à charger ;
la figure 5 représente, de façon très schématique et sous forme de blocs, un mode de réalisation d'un circuit de détection d'apparition d'une condition d'arrêt de génération de champ par un dispositif NFC chargeur d'un autre dispositif NFC à charger ;
la figure 6 illustre, par des chronogrammes, le fonctionnement du circuit décrit en relation avec la figure 5 ;
la figure 7 illustre, par un chronogramme à rapprocher du chronogramme de la figure 2, l'utilisation du circuit de la figure 5 pendant des phases de veille d'un dispositif NFC ; et
la figure 8 représente, sous forme de schéma-blocs, un mode de mise en oeuvre d'un procédé d'adaptation de seuils de sortie d'un mode de veille.

### Description des modes de réalisation

De mêmes éléments ont été désignés par de mêmes références dans les différentes figures. En particulier, les éléments structurels et/ou fonctionnels communs aux différents modes de réalisation et modes de mise en oeuvre peuvent présenter les mêmes références et peuvent disposer de propriétés structurelles, dimensionnelles et matérielles identiques.

Par souci de clarté, seuls les étapes et éléments utiles à la compréhension des modes de réalisation et modes de mise en oeuvre décrits ont été représentés et sont détaillés. En particulier, la génération des signaux radiofréquence et leur interprétation n'ont pas été détaillées, les modes de réalisation et modes de mise en oeuvre décrits étant compatibles avec les techniques usuelles de génération et d'interprétation de ces signaux.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Pour simplifier, on fera parfois référence à la charge ou recharge d'un dispositif NFC, mais cela signifie la charge ou la recharge d'une ou plusieurs batteries que comporte ce dispositif. De même, on utilisera indifféremment le terme charge et le terme recharge pour désigner la fourniture d'énergie à la batterie.

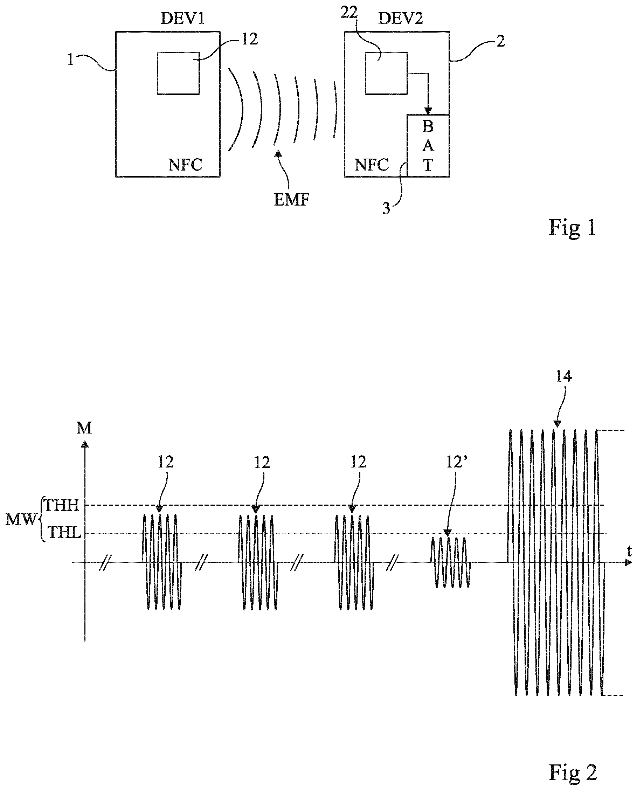

La figure 1 est une représentation, très schématique et sous forme de blocs, d'un exemple de système de communication en champ proche du type auquel s'appliquent, à titre d'exemple, des modes de réalisation décrits.

On suppose le cas de deux dispositifs électroniques similaires, par exemple deux téléphones mobiles, mais tout ce qui va être décrit s'applique plus généralement à tout système dans lequel un lecteur, borne ou terminal doit charger un transpondeur équipé d'une batterie par le champ électromagnétique qu'il rayonne. Pour simplifier, on fera référence à des dispositifs NFC pour designer des dispositifs électroniques intégrant des circuits de communication en champ proche.

Deux dispositifs NFC 1 (DEV1) et 2 (DEV2) sont susceptibles de communiquer par couplage électromagnétique en champ proche. Selon les applications, pour une communication, un des dispositifs fonctionne en mode dit lecteur tandis que l'autre fonctionne en mode dit carte, ou les deux dispositifs communiquent en mode poste à poste (peer to peer - P2P). Chaque dispositif comporte divers circuits électroniques 12 et 22 de génération et/ou de détection d'un signal radiofréquence à l'aide d'une antenne (non représentée). Le champ radiofréquence généré par l'un des dispositifs est capté par l'autre dispositif qui se trouve à portée.

Lorsqu'un dispositif (par exemple le dispositif 1) émet un champ électromagnétique pour initier une communication avec un autre dispositif NFC (par exemple le dispositif 2), ce champ est capté par ce dispositif 2 dès qu'il se trouve à portée. Le couplage entre les deux circuits oscillants (celui de l'antenne du dispositif 2 et de celle du dispositif 1) se traduit par une variation de la charge constituée par les circuits du dispositif 2 sur le circuit oscillant de génération du champ du dispositif 1. En pratique, pour une communication, la variation correspondante de phase ou d'amplitude du champ émis est détectée par le dispositif 1 qui entame alors un protocole de communication NFC avec le dispositif 2. Côté dispositif 1, on détecte en pratique si l'amplitude de la tension aux bornes du circuit oscillant et/ou le déphasage par rapport au signal généré par le circuit 1 sortent de fenêtres d'amplitudes et de phases définies chacune par un seuil inférieur et un seuil supérieur.

Dans le cas d'une communication, une fois que le dispositif 1 a détecté la présence du dispositif 2 dans son champ, il entame une procédure d'établissement de communication, mettant en oeuvre des émissions de requêtes par le dispositif 1 et de réponses par le dispositif 2 (séquence d'interrogation telle que définie dans la norme NFC Forum). Les circuits du dispositif 2, s'ils sont en veille, sont alors réactivés.

Lorsque qu'un des dispositifs NFC, par exemple le dispositif 1, est utilisé pour charger une batterie 3 (BAT) de l'autre dispositif 2, le champ électromagnétique EMF généré par le dispositif 1 est capté par les circuits 22 du dispositif 2 et l'énergie qui en est extraite est utilisée pour charger la batterie 3.

Pour des raisons d'économie d'énergie, le dispositif émetteur 1, qu'il soit raccordé sur le secteur de distribution électrique ou lui-même alimenté directement ou indirectement par batterie, est mis en veille lorsqu'il n'est pas utilisé pour la charge ou pour une communication. Par conséquent, il doit détecter la présence d'un dispositif 2 à charger afin de commencer à générer le champ de fourniture d'énergie.

Les dispositifs NFC sont généralement équipés de circuits de détection d'un autre dispositif se trouvant dans leur champ afin de sortir d'un mode de veille à des fins de communication.

Dans les applications plus particulièrement visées par la présente description, lorsqu'un dispositif NFC n'est pas en cours de communication, il est commuté en mode dit basse consommation (Low Power) afin de réduire l'énergie consommée. Cela est en particulier le cas pour les dispositifs alimentés par batteries. Dans ce mode basse consommation, un dispositif configuré en mode lecteur exécute un mode dit de détection de carte (Tag détection ou Card détection) et exécute des boucles de détection. La détection est similaire à celle opérée lorsque le dispositif n'est pas en mode basse consommation, mais la différence est que, en mode normal, l'émission de la porteuse est continue et inclut périodiquement des trames d'interrogation alors que, pour réduire la consommation, l'émission du champ s'effectue par salves (burst) périodiques et sans trame d'interrogation lorsque le dispositif est en mode basse consommation. Les salves sont d'une durée nettement inférieure (dans un rapport d'au moins dix, de préférence d'au moins cent) à la durée d'une requête d'interrogation d'une carte en mode normal.

La figure 2 illustre, par un chronogramme, un exemple de processus de détection, par un dispositif en mode lecteur en veille, d'un dispositif en mode carte.

La figure 2 illustre de façon très schématique un exemple d'allure de l'amplitude M du signal aux bornes du circuit oscillant du dispositif opérant en mode lecteur.

Lorsqu'il est en mode basse consommation, un dispositif NFC (par exemple le dispositif chargeur 1) qui cherche à détecter la présence d'autres dispositifs à portée émet périodiquement une salve (burst) de champ 12. Cette salve de détection ne comporte généralement que la porteuse, typiquement à 13,56 MHz, sans modulation et est de durée relativement courte par rapport à l'intervalle entre deux salves, de préférence dans un rapport d'au moins 100. L'intervalle entre deux salves dépend des dispositifs mais est généralement de quelques centaines de millisecondes (typiquement 256 ms) tandis que la durée d'une salve 12 est de l'ordre de la dizaine ou centaine de microsecondes. Quand un dispositif se trouve dans le champ et modifie la charge du circuit oscillant du dispositif émetteur, cela se traduit par une variation d'amplitude et/ou de phase du signal aux bornes du circuit oscillant lors d'une salve correspondante 12'. Si cette variation est suffisante pour sortir d'une fenêtre d'amplitudes MW, définie par un seuil inférieur THL et un seuil supérieur THH, le dispositif émetteur bascule en mode actif, c'est-à-dire qu'il quitte le mode basse consommation, et émet alors normalement (émission 14).

Le cas échéant, le dispositif 1 sort du mode veille temporairement et périodiquement pour émettre les salves 12. Toutefois, on préfère utiliser une machine d'états pour l'émission de salves en mode basse consommation, ce qui évite de devoir réveiller un microcontrôleur du dispositif et permet ainsi de rester en mode veille.

En pratique, un dispositif en mode carte est considéré détecté à des fins de communication ou de recharge, lors d'une salve de détection 12, si l'amplitude et/ou la phase sort de fenêtres définies chacune par deux seuils représentant respectivement une plage d'amplitudes et une plage de phases à l'intérieur de laquelle on considère qu'on est à vide (sans carte en présence). Dans l'exemple de la figure 2, on suppose que la présence d'une carte se traduit par une baisse d'amplitude (salve 12'). Toutefois, la présence d'une carte peut, selon les conditions, également se traduire par une augmentation de l'amplitude. Il en est de même pour le déphasage par rapport au signal émis.

Lorsqu'une carte est détectée et que le dispositif émetteur est activé, il se met à émettre le champ avec des trames 14 d'interrogation (polling) d'une communication. Ces trames sont normalisées (norme NFC Forum) et sont fonction des protocoles de communication supportés par le lecteur. Le dispositif récepteur (en mode carte) répond à la requête selon le protocole qu'il supporte et la communication démarre. La durée d'émission d'une trame est généralement de l'ordre de quelques millisecondes à quelques dizaines de millisecondes.

Dans le cas d'une recharge du dispositif 2 par le dispositif 1, une communication telle que ci-dessus précède généralement la recharge de la batterie afin que le dispositif 2 à recharger commute ses circuits internes de façon adaptée pour que l'énergie extraite du champ électromagnétique charge sa batterie.

Lorsque la recharge est terminée ou lorsque le dispositif récepteur à charger sort du champ, le dispositif émetteur doit repasser en mode basse consommation au bout d'un certain temps (de l'ordre de la seconde) afin de réduire sa consommation. Il se remet alors à émettre périodiquement des salves de détection sans requête de communication.

Pendant que le dispositif chargeur est en génération de champ pour effectuer la recharge d'un autre dispositif, on souhaiterait que ce dispositif chargeur soit capable de détecter certaines conditions, dites perturbatrices, justifiant l'arrêt de la charge.

Une première condition, que l'on souhaiterait que le dispositif chargeur 1 soit capable de détecter, est la présence d'un objet perturbateur, dit objet étranger (FOD - Foreign Object Détection), pendant qu'il effectue la recharge du dispositif 2.

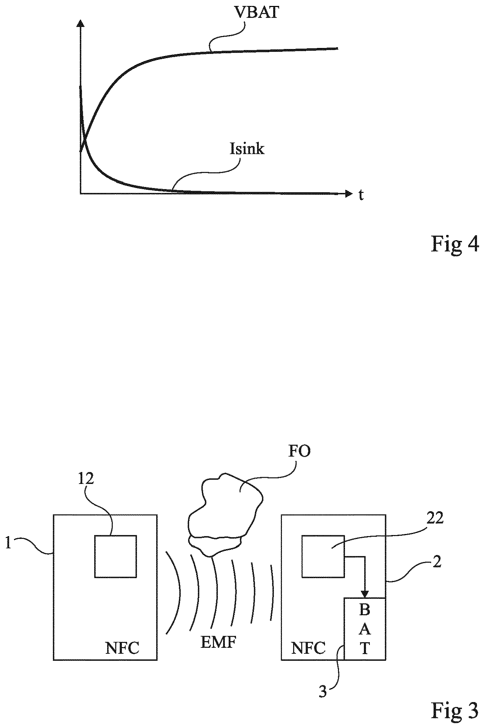

La figure 3 illustre, sous forme de blocs et de façon très schématique, la présence d'un objet étranger dans un champ électromagnétique de recharge d'un dispositif NFC.

On retrouve les éléments du système représenté en figure 1 et on suppose que le dispositif 1 génère un champ électromagnétique pour recharger la batterie 3 du dispositif 2.

La figure 3 illustre la présence d'un objet ou corps étranger FO dans le champ électromagnétique EMF généré par le dispositif 1. Par "dans le champ", on entend un objet suffisamment proche du dispositif 1 pour perturber le champ EMF, c'est-à-dire engendrer une variation significative, de l'amplitude et/ou de la phase, de la tension aux bornes du circuit oscillant du dispositif 1.

Une deuxième condition, que l'on souhaiterait que le dispositif chargeur 1 soit capable de détecter, est une sortie par le dispositif 2 du champ électromagnétique, c'est-à-dire une situation dans laquelle il n'est plus à portée suffisante du dispositif 1 pour capter de l'énergie de façon suffisante pour charger sa batterie.

Une troisième condition, que l'on souhaiterait que le dispositif chargeur 1 soit capable de détecter, est la fin de charge de la batterie du dispositif 2. Dans certains cas, cette fin de charge est signalée par une communication entre le dispositif chargé et le dispositif chargeur. Dans d'autres cas, cette communication n'intervient pas.

Selon les modes de réalisation décrits, en présence d'une de ces conditions, le dispositif stoppe la charge, c'est-à-dire coupe l'émission du champ électromagnétique. Il se remet alors de préférence en mode veille. Bien que ce fonctionnement puisse s'apparenter à un mode de fonctionnement normal, on considère qu'il s'agit d'une condition perturbatrice en ce sens qu'elle justifie l'arrêt de la recharge.

La détection d'une de ces conditions perturbatrices (objet étranger, sortie de champ par le dispositif en cours de charge, fin de charge) requiert que le dispositif émetteur analyse les variations de charge de son circuit oscillant afin d'être capable d'effectuer la détection.

Les modes de réalisation décrits tirent leur origine d'une nouvelle analyse des effets des conditions que l'on souhaite détecter sur le champ magnétique produit par les dispositifs chargeurs.

Les conditions que l'on souhaite détecter sont apparemment contradictoires. En effet, l'apparition d'un objet étranger représente un objet additionnel dans le champ et la sortie du dispositif en cours de charge représente un objet en moins dans le champ.

On s'aperçoit en fait qu'en utilisant les circuits de détection de présence d'une carte dans le champ d'un lecteur qui exploitent une fenêtre de détection, on peut considérer que, quelle que soit la condition qui perturbe le champ, celle-ci provoque une sortie du signal de la fenêtre considérée. Par conséquent, on peut considérer qu'une fois le dispositif 2 en charge, si l'information représentative de l'amplitude et/ou l'information représentative de la phase sort de la fenêtre de détection, c'est qu'une des conditions à détecter est remplie.

Selon les modes de réalisation décrits, on prévoit de comparer les variations d'amplitude et/ou de phase du signal aux bornes du circuit oscillant du dispositif 1 par rapport à des seuils afin de considérer qu'une des conditions d'arrêt de la recharge est remplie lorsqu'un de ces seuils est dépassé (dans le sens d'une augmentation ou d'une diminution).

Une difficulté réside alors dans le fait que la détection, par le dispositif émetteur, d'une variation de l'amplitude du champ ou de sa phase peut être perturbée par différents facteurs environnementaux autres que les conditions que l'on souhaite détecter (variation de température, etc.). Cela peut conduire soit à de fausses détections d'une des conditions, soit à des absences de détection d'une des conditions que l'on souhaite détecter.

De plus, la recharge de la batterie du dispositif 2 à charger engendre elle-même une variation de l'amplitude et de la phase du signal émis par le dispositif 1. En particulier, au fur et à mesure que la batterie se recharge, l'amplitude du courant tiré sur le champ diminue.

La figure 4 illustre, sous la forme d'un chronogramme, un exemple de variation du courant tiré sur le champ électromagnétique d'un chargeur en fonction du niveau de charge de la batterie à charger.

La courbe VBAT illustre l'évolution au cours du temps de la tension aux bornes de la batterie en cours de charge.

La courbe Isink illustre l'évolution correspondante du courant prélevé sur le champ électromagnétique.

Ces variations se traduisent sur la charge équivalente du circuit oscillant du dispositif chargeur et font donc varier l'amplitude et la phase du signal aux bornes de ce circuit oscillant.

Selon les modes de réalisation décrits, on prévoit de faire varier la fenêtre de détection de présence d'un dispositif NFC (la fenêtre MW en figure 2), que ce soit pour l'amplitude ou pour la phase, de façon à ajuster les seuils de détection aux conditions normales de détection. Ainsi, lorsque le signal sort de cette fenêtre, dans une direction ou autre, cela signifie qu'une des deux premières conditions (présence d'un objet étranger ou sortie du champ par le dispositif en cours de charge) est remplie.

Selon un mode de réalisation préféré, on utilise les circuits de détection de présence du type de ceux utilisés pour une sortie de mode veille. En effet, pourvu que l'on adapte les seuils de détection en temps réel comme on le verra par la suite, la nature de la détection souhaitée pour détecter une condition justifiant l'arrêt de la recharge est similaire à une détection de présence ou d'absence d'un transpondeur dans le champ.

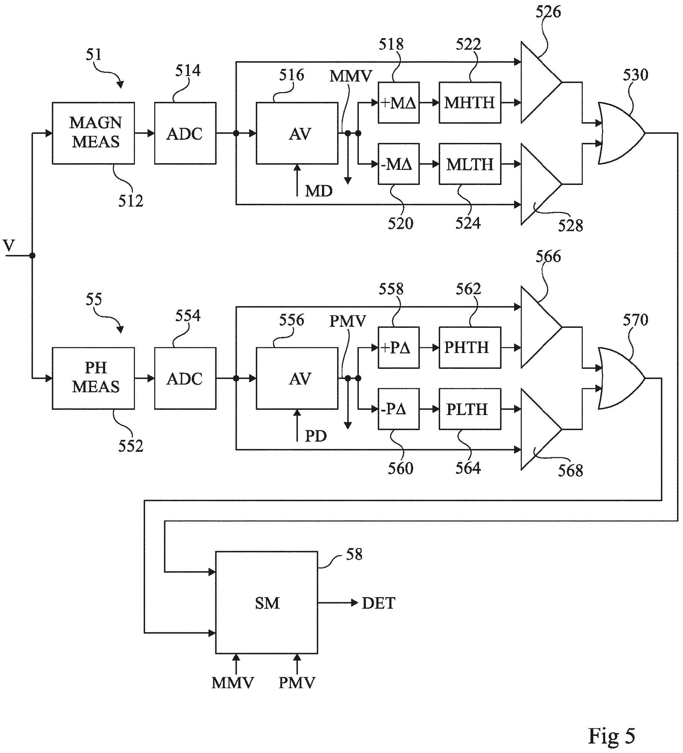

La figure 5 représente, de façon très schématique et sous forme de blocs, un mode de réalisation d'un circuit de détection d'apparition d'une condition d'arrêt de génération de champ par un dispositif NFC chargeur d'un autre dispositif NFC à charger.

Le circuit de la figure 5 comporte deux voies 51 et 55 de détection, respectivement dédiées à l'amplitude (MAGN) et à la phase (PH) du signal (de la tension V) aux bornes du circuit oscillant ou de l'antenne du dispositif chargeur 1.

Chaque voie 51, respectivement 55, comporte successivement :
un élément 512 (MAGN MEAS), respectivement 552 (PH MEAS), d'extraction ou de mesure d'une information analogique représentative de l'amplitude, respectivement de la phase, du signal aux bornes du circuit oscillant ;
un élément 514, respectivement 554, de conversion analogique-numérique (ADC) des mesures réalisées par les éléments 512 et 552 ;
un élément 516, respectivement 556, de calcul de la valeur moyenne (AV) du signal de sortie de l'élément 514, respectivement 554, et fournissant une valeur moyenne d'amplitude MMV, respectivement de phase PMV ;
des éléments 518 (+MΔ) et 520 (-MΔ), respectivement 558 (+PΔ) et 560 (-PΔ), de calcul des seuils hauts MHTH, respectivement PHTH, et bas MLTH, respectivement PLTH, d'amplitude et de phase, définissant ainsi une fenêtre glissante d'amplitudes MSW, respectivement de phases PSW ;
des éléments 522 (MHTH) et 524 (MLTH), respectivement 562 (PHTH) et 564 (PLTH), de mémorisation des valeurs courantes des seuils calculés ;
des comparateurs 526 et 528, respectivement 566 et 568, des valeurs courantes issues de l'élément 514, respectivement 554, aux seuils bas et haut mémorisés dans les éléments 522 et 524, respectivement 562 et 564 ; et
une porte 530, respectivement 570, de combinaison (par exemple une combinaison de type OU) des résultats fournis par les comparateurs 526 et 528, respectivement 566 et 568.

La description ci-dessous est fonctionnelle et tout circuit électronique adapté à mettre en oeuvre ces fonctions de façon matérielle et/ou logicielle (par exemple par un "produit programme d'ordinateur", considéré ici comme des instructions d'un programme d'un microcontrôleur ou d'un microprocesseur) peut être utilisé.

Les signaux numériques fournis par les portes respectives 530 et 570 représentent, selon leur état, le résultat de détection de présence d'un élément supplémentaire dans le champ, ou de disparition d'un élément du champ, rayonné par le dispositif 1.

Les circuits 516 et 556 de calcul de la valeur moyenne courante de l'amplitude et de la phase sont, de préférence, paramétrables en profondeur par un signal numérique de consigne MD, respectivement PD, c'est-à-dire en nombre d'échantillons précédant la valeur courante prise en compte dans la moyenne. Cela revient à déterminer la fréquence de coupure d'un filtre passe-bas réalisant la moyenne. A titre d'exemple particulier de réalisation, on prévoit une moyenne sur 5 à 50 valeurs, de préférence de l'ordre de 10 à 20 valeurs.

La fréquence des mesures effectuées de l'amplitude et de la phase dépend de l'application et peut varier. Selon un mode particulier de réalisation, on prévoit une évaluation de l'amplitude et de la phase plusieurs fois par seconde, par exemple entre 1 et 10 fois par seconde, de préférence 3 à 4 fois par seconde.

Les éléments 518 et 520, respectivement 558 et 560, ajoutent et retranchent, de la valeur courante MMV, respectivement PMV, un écart MΔ, respectivement PΔ, afin de définir l'amplitude de la fenêtre de détection. La fenêtre est de préférence (mais pas nécessairement) centrée sur la valeur moyenne courante.

Les sorties respectives des portes 530 et 570 sont, par exemple, envoyées à une machine d'états 58 (SM) qui fournit le résultat DET de la détection. Ce résultat est interprété par les circuits 12 du dispositif chargeur 1. Par exemple, si ce résultat est dans un premier état, cela signifie que la charge peut se poursuivre. Dans le cas contraire, cela signifie que le dispositif 1 doit interrompre la charge et repasser en mode d'interrogation (polling) ou en veille.

De préférence, la machine d'états 58, ou un processeur du dispositif 1, reçoit également une information sur la présence ou l'absence d'une variation des valeurs moyennes MMV et PMV. Par exemple, la machine d'états 58 reçoit les valeurs moyennes MMV et PMV et détermine si elles varient. En cas d'absence de variation pendant une durée supérieure à un seuil (par exemple de quelques secondes), on considère que la charge est terminée, le dispositif 2, même s'il est encore présent, ne prélevant plus d'énergie (voir la partie droite de la figure 4). La machine d'états 58 commute alors le signal DET.

En reprenant l'exemple des trois conditions à détecter :
si un objet étranger s'approche du dispositif 1 et apporte une perturbation suffisante pour être détecté, la sortie d'au moins un des comparateurs 526, 528, 566 et 568 bascule et on arrête la recharge ;
si le dispositif 2 en cours de recharge sort du champ, la sortie d'au moins un des comparateurs 526, 528, 566 et 568 bascule et on arrête la recharge ; et
si la recharge est terminée, les moyennes glissantes n'évoluent plus et on arrête la recharge.

Les voies ou chaînes de traitement 51 et 55 illustrées par la figure 5 permettent d'adapter les fenêtres de détection en amplitude et en phase à partir d'une moyenne glissante du signal correspondant. On détermine en quelque sorte des fenêtres glissantes d'amplitudes et de phases pour effectuer la détection de présence ou d'absence.

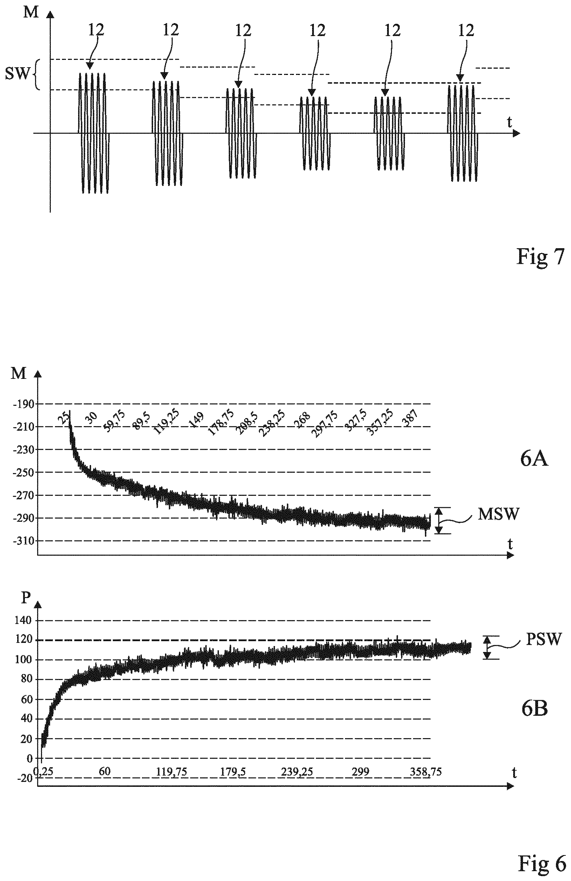

La figure 6 illustre, par des chronogrammes, le fonctionnement du circuit décrit en relation avec la figure 5.

Cette figure représente des exemples de chronogrammes d'évolution de l'amplitude (vue 6A) et de la phase (vue 6B), mesurées par un dispositif chargeur, au cours de la recharge d'un dispositif à charger.

On suppose un fonctionnement normal, c'est-à-dire que, pendant la phase de recharge, aucun phénomène (objet étranger ou sortie de champ) ne vient perturber la charge qui peut donc s'opérer correctement.

L'amplitude M de la tension aux bornes du circuit oscillant décroît alors avec une allure inverse à l'allure de croissance de la tension VBAT (figure 4) du dispositif chargé. Par ailleurs, dans cet exemple, la phase P du signal aux bornes du circuit oscillant croît avec une allure inverse à l'allure de décroissance du courant Isink prélevé par le dispositif chargé.

Comme l'illustrent les vues 6A et 6B de la figure 6, en prenant la valeur moyenne de l'amplitude M et de la phase P, et en définissant une fenêtre MSW, respectivement PSW, en fonction (de largeur ou d'amplitude fonction) de l'évolution de cette valeur moyenne en fonctionnement normal, les oscillations des valeurs instantanées mesurées d'amplitude et de phase (les valeurs échantillonnées) varient suffisamment faiblement pour que l'on puisse considérer qu'aucune des première et deuxième conditions n'est remplie. A l'inverse, une fois que la batterie est rechargée et que le dispositif 2 ne tire plus d'énergie sur le champ rayonné par le dispositif 1, même si le dispositif 2 n'indique pas la fin de charge par une communication avec le dispositif 1, ce dernier peut déterminer que l'amplitude M et la phase P ne varient plus suffisamment (ne sortent pas des fenêtres de seuils) et considérer alors que la recharge est terminée.

Un avantage des modes de réalisation décrits est qu'ils permettent d'ajuster les seuils de détection afin de suivre les variations lentes (basse fréquence) tout en autorisant une détection de variations brusques représentatives de l'apparition d'une des premières conditions que l'on souhaite détecter. Un autre avantage est que cet ajustement des seuils de détection permet en outre de détecter aisément une fin de charge, même si le dispositif chargé n'envoie pas de message de fin de charge.

On notera que le système décrit d'adaptation des seuils de détection par moyenne glissante, pour la détection d'un objet étranger ou autres conditions affectant le champ électromagnétique émis par un dispositif pendant la recharge d'un autre dispositif, peut également servir à adapter les seuils de sortie du mode de veille.

En effet, pour une sortie de son mode de veille, lorsque le dispositif en mode lecteur émet des salves d'interrogation, une variation de l'amplitude du champ ou de sa phase peut également être perturbée par différents facteurs environnementaux (objets métalliques à proximité, température, etc.). Cela peut conduire soit à de fausses détections, soit à des absences de détection.

Pour tenter de pallier ce problème, les solutions actuelles consistent à adapter les seuils (calibration) avant que le dispositif ne commute en mode basse consommation. Une telle calibration des seuils consiste à émettre une salve de porteuse et à mesurer le signal aux bornes du circuit oscillant pour déterminer un niveau « à vide ». Le seuil de détection est alors adapté par rapport à cette situation à vide.

Toutefois, ces solutions s'avèrent insatisfaisantes. D'une part, des éléments perturbateurs peuvent interférer avec le champ émis et engendrer de fausses détections ou masquer des dispositifs présents dans le champ. D'autre part, la calibration est effectuée à chaud, c'est-à-dire à un moment où les circuits électroniques du dispositif sortent d'un mode actif dans lequel ils ont consommé et sont donc à une température relativement élevée par rapport à la température ambiante représentant leur température au repos. Cette détermination des seuils à chaud nuit à la fiabilité du système de détection.

On pourrait penser attendre le refroidissement des circuits pour effectuer la calibration. Cependant, cela engendre une période longue (plusieurs secondes, voire plusieurs minutes) avant de pouvoir effectuer la calibration et, pendant tout ce temps, la détection du mode basse consommation ne fonctionne pas. De surcroît, cela ne réglerait pas la présence d'autres perturbations environnementales.

On peut donc prévoir d'ajuster les seuils de détection de la sortie du mode de veille à l'aide des circuits décrits en relation avec la figure 5. De préférence, ces circuits sont partagés, c'est-à-dire que l'on utilise les mêmes éléments pour la sortie du mode de veille ou pour la détection, pendant une phase de recharge d'un autre dispositif, d'un objet étranger ou d'une sortie du champ par le dispositif en cours de recharge.

La figure 7 illustre, par un chronogramme à rapprocher du chronogramme de la figure 2, l'utilisation du circuit de la figure 5 pendant des phases de veille du dispositif 1.

Cette figure s'applique à la fois à l'amplitude et à la phase du signal aux bornes du circuit oscillant du dispositif 1. En effet, que ce soit pour l'amplitude ou pour la phase, la grandeur évaluée est traduite en valeur de tension par le bloc 512 ou 552, puis en nombre par le bloc 514 ou 554, et peut donc être représentée par une amplitude (amplitude M, figure 7). De même, dans les deux cas, la mise en oeuvre des modes de réalisation décrits se traduit par une évolution d'une fenêtre SW glissante d'une salve 12 à l'autre en fonction de l'évolution de l'environnement du dispositif 1.

Au début, la calibration (à chaud) fournit des seuils identiques à la solution de la figure 2 (l'échelle n'est pas respectée par rapport à la figure 2). Toutefois, ces seuils diminuent progressivement au fur et à mesure que les circuits électroniques du dispositif refroidissent. Par conséquent, une carte qui ne serait pas détectée avec la solution usuelle est ici détectée et, à l'inverse, on évite une fausse détection qui ne serait due qu'au refroidissement du dispositif. De plus, les seuils peuvent le cas échéant réaugmenter (plus généralement varier) en présence d'autres éléments perturbateurs dans l'environnement du dispositif (par exemple, une main, un objet métallique, etc.) comme l'illustre la partie droite de la figure 7.

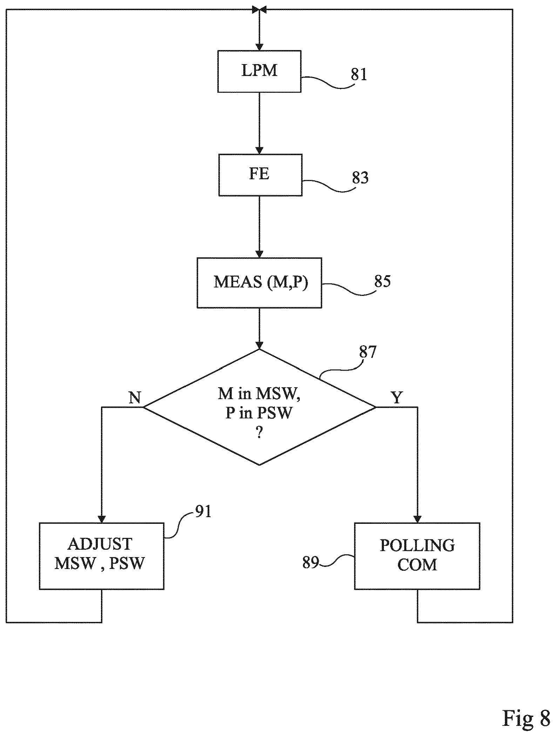

La figure 8 représente, sous forme de schéma-blocs, un mode de mise en oeuvre d'un procédé d'adaptation de seuils de sortie d'un mode veille, ce qui revient à un procédé de détection de présence d'un dispositif NFC dans le champ d'un dispositif émetteur.

Selon ce mode de réalisation, on prévoit également d'ajuster périodiquement les seuils de détection. De préférence, cet ajustement est effectué à chaque salve de détection. En d'autres termes, le processus de calibration habituellement effectué, pour un passage en mode veille, avant de passer en mode basse consommation, est exécuté à chaque salve de détection. En effet, une salve de détection correspond à l'émission d'un champ pendant une courte durée (de l'ordre de la dizaine ou centaine de microsecondes). Il est alors possible de mesurer l'amplitude et la phase afin d'adapter les seuils de détection.

On considère le cas d'un dispositif NFC (par exemple DEV1, figure 1) qui, lorsqu'il est en mode basse consommation (bloc 81, LPM), émet périodiquement (par exemple toutes les 256 ms) un champ pendant une durée relativement courte (de l'ordre d'une dizaine à quelques centaines de microsecondes) par rapport à la durée entre deux salves 12 de champ, afin de détecter la présence d'un autre dispositif NFC à portée. Selon la manière dont sont mises en oeuvre les salves (microcontrôleur ou machine d'états), le dispositif sort du mode veille pendant l'émission d'une salve pour y retourner immédiatement après ou reste en mode veille tant qu'un dispositif n'est pas détecté. On suppose, en figure 8, le cas où le dispositif reste en mode veille.

Pour chaque salve 12, le dispositif émet un champ (bloc 83, FE) à la fréquence de résonance du système et mesure (bloc 85, MEAS (M, P)) l'amplitude M et la phase P du signal aux bornes de son circuit oscillant (non représenté).

En supposant qu'un deuxième dispositif (DEV2, figure 1) est à portée, sa simple présence (le couplage entre les deux antennes) engendre une variation d'amplitude et de phase côté dispositif 1. Si cette variation est suffisante pour que l'un des seuils de détection en amplitude MHTH et MLTH, ou l'un des seuils de détection en phase PHTH et PLTH, soit atteint, c'est-à-dire que l'amplitude ou la phase mesurée sorte de la fenêtre SW (figure 7) (MSW pour l'amplitude, PSW pour la phase, sortie Y du bloc 87, M in MSW, P in PSW ?), on valide la détection.

Le dispositif 1 quitte alors le mode basse consommation pour initier une communication (bloc 89, POLLING COM). Ce basculement peut s'effectuer directement à la suite de la salve de détection ou après un intervalle de temps (faible devant l'intervalle de temps entre deux salves 12).

Dans le cas contraire (sortie N du bloc 87), c'est-à-dire si le signal reste dans les fenêtres MSW et PSW correspondant au fonctionnement à vide, la salve de détection s'arrête.

Toutefois, selon le mode de réalisation décrit, les seuils d'amplitude et de phase sont mis à jour (bloc 91, ADJUST MSW, PSW) en fonction de valeurs M et P mesurées pendant la salve courante de détection afin de servir de seuils pour la salve suivante. Ce fonctionnement est similaire au fonctionnement décrit en relation avec la figure 5. Ainsi, chaque salve de détection sert non seulement à la détection mais également à l'adaptation des seuils de détection pour la ou les salves suivantes. Les seuils ajustés sont stockés et le dispositif continue sa surveillance (revient au bloc 81).

En pratique, dans le cas d'une machine d'états, celle-ci se met dans un mode d'attente ou inactif pendant une temporisation correspondant à l'intervalle entre deux salves.

En cas de communication (bloc 89, POLLING COM), on revient à un mode basse consommation (bloc 81) une fois la communication terminée.

En variante, l'adaptation des seuils n'est pas effectuée à chaque salve de détection mais avec une certaine périodicité de salve, par exemple toutes les deux salves ou toutes les quatre salves. Toutefois, la calibration est de préférence effectuée à chaque salve car cela donne une détection plus fiable.

Selon un mode de réalisation, les seuils mémorisés sont simplement remplacés par les nouveaux seuils mesurés à chaque salve et les nouveaux seuils sont utilisés pour la salve suivante.

Selon un autre mode de réalisation préféré, compatible avec le mode de réalisation de la figure 5, on effectue une moyenne glissante sur un nombre de mesures compris entre, par exemple 5 et 50, de préférence de l'ordre de 10 à 20. Initialement (lors du passage en mode basse consommation), le nombre de seuils pris en compte dans la moyenne est plus faible (par exemple il débute à un et croît au fur et à mesure des mesures jusqu'à 10).

Un avantage des modes de réalisation décrits est qu'il est désormais possible d'utiliser efficacement une détection automatique de sortie de mode basse consommation par détection de présence d'un dispositif en mode carte dans le champ.

Un autre avantage est que les solutions décrites engendrent une consommation supplémentaire négligeable, qui se limite à la mémorisation du seuil à chaque salve avec un calcul de moyenne. En particulier, la mesure elle-même n'engendre pas de consommation supplémentaire dans la mesure où l'on tire profit de la mesure effectuée pour la détection.

Un autre avantage des modes de réalisation décrits est qu'ils ne modifient pas les protocoles de communication entre les dispositifs. Ainsi, les solutions décrites sont compatibles avec les systèmes usuels.

Un autre avantage des modes de réalisation décrits est que l'on peut utiliser le même principe de fenêtres de seuils glissantes, voire les mêmes circuits, pour détecter une sortie de mode veille et une sortie de mode de recharge.

Un autre avantage est que la mise en oeuvre des modes de réalisation décrits est compatible avec une mise en oeuvre logicielle. Ainsi, selon un mode de réalisation, la mise en oeuvre des modes de réalisation décrits utilise les fonctions matérielles existantes des dispositifs existants et ne requiert qu'une mise à jour logicielle afin d'intégrer les étapes du procédé d'ajustement des seuils de détection. Toutefois, selon un mode de réalisation préféré évitant notamment de sortir temporairement du mode basse consommation à chaque salve, on prévoit une mise en oeuvre par une solution matérielle, par exemple par une machine d'états (en logique câblée). Cela permet généralement une exécution plus rapide et de moindre consommation.

Divers modes de réalisation et modes de mise en oeuvre ont été décrits. Diverses modifications apparaîtront à l'homme de l'art. En particulier, la durée entre deux échantillons de mesure de l'amplitude et de la phase peut varier d'une application à une autre. De plus, la détermination de l'amplitude ou profondeur des fenêtres de détection (l'intervalle entre les deux seuils de définition de la fenêtre d'amplitudes et l'intervalle entre les deux seuils de définition de la fenêtre de phases) dépend de l'application et peut varier.

Enfin, la mise en oeuvre pratique des modes de réalisation, modes de mise en oeuvre et variantes décrits est à la portée de l'homme du métier à partir des indications fonctionnelles données ci-dessus.

## Revendications

1. Procédé de détection, par un premier dispositif NFC (1) générant un champ électromagnétique de recharge d'une batterie (3) d'un deuxième dispositif NFC (2), d'une condition perturbatrice d'une recharge du deuxième dispositif, dans lequel deux seuils (MHTH, MLTH) définissant une fenêtre (MSW) d'amplitudes et/ou deux seuils (PHTH, PLTH) définissant une fenêtre (PSW) de phases, d'un signal aux bornes d'un circuit oscillant de génération du champ électromagnétique de recharge, sont ajustés en temps réel au cours de la recharge, la condition perturbatrice étant :
une apparition d'un objet étranger (FO) dans le champ généré par le premier dispositif (1) ;
une sortie du deuxième dispositif (2) du champ généré par le premier dispositif (1) ; ou
une situation de charge complète de la batterie (3) du deuxième dispositif (2).

2. Circuit de détection d'une condition perturbatrice d'une recharge, par un premier dispositif NFC (1), d'une batterie (3) d'un deuxième dispositif NFC (2) par champ électromagnétique, comportant des éléments d'ajustement, au cours de la recharge, de deux seuils (MHTH, MLTH) définissant une fenêtre (MSW) d'amplitudes et/ou de deux seuils (PHTH, PLTH) définissant une fenêtre (PSW) de phases, d'un signal aux bornes d'un circuit oscillant de génération du champ électromagnétique de recharge, la condition perturbatrice étant :
une apparition d'un objet étranger (FO) dans le champ généré par le premier dispositif (1) ;
une sortie du deuxième dispositif (2) du champ généré par le premier dispositif (1) ; ou
une situation de charge complète de la batterie (3) du deuxième dispositif (2).

3. Dispositif NFC (1) comportant un circuit selon la revendication 2 et/ou un processeur pour la mise en oeuvre du procédé selon la revendication 1.

4. Produit programme d'ordinateur comportant des instructions qui, lorsqu'elles sont mises en oeuvre par un ordinateur associé au premier dispositif NFC, mettent en oeuvre le procédé de détection d'une condition perturbatrice d'une recharge du deuxième dispositif NFC selon la revendication 1.

5. Procédé selon la revendication 1, ou circuit selon la revendication 2, ou dispositif selon la revendication 3, ou produit programme selon la revendication 4, dans lequel les seuils (MHTH, MLTH, PHTH, PLTH) sont ajustés plusieurs fois par seconde pendant la recharge de la batterie (3) du deuxième dispositif (2).

6. Procédé selon la revendication 1 ou 5, ou circuit selon la revendication 2 ou 5, ou dispositif selon la revendication 3 ou 5, ou produit programme selon la revendication 4 ou 5, dans lequel ladite fenêtre (MSW, PSW) est une fenêtre glissante en fonction d'une moyenne de plusieurs valeurs mesurées de l'amplitude ou de la phase.

7. Procédé, ou circuit, ou dispositif, ou produit programme selon la revendication 6, dans lequel la moyenne prend en compte entre 5 et 50, de préférence entre 10 et 20 valeurs.

8. Procédé selon l'une quelconque des revendications 1, 5 à 7, ou circuit selon l'une quelconque des revendications 2, 5 à 7, ou dispositif selon l'une quelconque des revendications 3, 5 à 7, ou produit programme selon l'une quelconque des revendications 4 à 7, dans lequel le premier dispositif (1) stoppe la recharge si l'amplitude courante mesurée sort de la fenêtre (MSW) de seuils d'amplitude (MHTH, MLTH) ou si la phase courante mesurée sort de la fenêtre (PSW) de seuils de phase (PHTH, PLTH).

9. Procédé selon l'une quelconque des revendications 1, 5 à 8, ou circuit selon l'une quelconque des revendications 2, 5 à 8, ou dispositif selon l'une quelconque des revendications 3, 5 à 8, ou produit programme selon l'une quelconque des revendications 4 à 8, dans lequel une situation de charge complète est validée en cas d'absence de variation des seuils (MHTH, MLTH, PHTH, PLTH) pendant une durée choisie.

10. Procédé selon l'une quelconque des revendications 1, 5 à 9, ou circuit selon l'une quelconque des revendications 2, 5 à 9, ou dispositif selon l'une quelconque des revendications 3, 5 à 9, ou produit programme selon l'une quelconque des revendications 4 à 9, dans lequel, hors de périodes de recharge, l'ajustement des seuils est effectué pendant des salves d'émission (12) entre des phases de veille du premier dispositif (1).

11. Procédé, ou circuit, ou dispositif, ou produit programme selon la revendication 10, dans lequel le premier dispositif (1) bascule dans un mode de fonctionnement d'émission d'une séquence d'interrogation telle que définie dans la norme NFC Forum lorsqu'un deuxième dispositif (2) est détecté à portée.

## Patentansprüche

1. Ein Verfahren zum Erkennen, durch eine erste NFC Vorrichtung (1), die ein elektromagnetisches Feld zum Laden einer Batterie (3) einer zweiten NFC-Vorrichtung (2) erzeugt, einer Störungsbedingung bei einem Laden der zweiten Vorrichtung, wobei zwei Schwellenwerte (MHTH, MLTH), die ein Betragsfenster (MSW) definieren, und/oder zwei Schwellenwerte (PHTH, PLTH), die ein Phasenfenster (PSW) definieren, eines Signals an den Anschlüssen eines Schwingkreises zum Erzeugen eines elektromagnetischen Ladefeldes in Echtzeit während des Ladens eingestellt werden, wobei die Störungsbedingung Folgendes ist:
ein Auftreten eines Fremdkörpers (FO) in dem von der ersten Vorrichtung (1) erzeugten Feld;
ein Abweichen der zweiten Vorrichtung (2) von dem von der ersten Vorrichtung (1) erzeugten Feld; oder
ein Vollladezustand der Batterie (3) der zweiten Vorrichtung (2).

2. Eine Schaltung zum Erkennen, durch eine erste NFC Vorrichtung (1), einer Bedingung, die Laden einer Batterie (3) einer zweiten NFC-Vorrichtung (2) durch ein elektromagnetisches Feld stört, aufweisend Elemente zum Anpassen, während des Ladens, zweier Schwellenwerte (MHTH, MLTH), die ein Betragsfenster (MSW) definieren, und/oder zweier Schwellenwerte (PHTH, PLTH), die ein Phasenfenster (PSW) definieren, eines Signals an den Anschlüssen eines Schwingkreises zum Erzeugen eines elektromagnetischen Ladefeldes, wobei die Störungsbedingung Folgende ist:
ein Auftreten eines Fremdkörpers (FO) in dem von der ersten Vorrichtung (1) erzeugten Feld;
ein Abweichen der zweiten Vorrichtung (2) von dem von der ersten Vorrichtung (1) erzeugten Feld; oder
ein Vollladezustand der Batterie (3) der zweiten Vorrichtung (2).

3. Eine NFC Vorrichtung (1) aufweisend eine Schaltung nach Anspruch 2 und/oder einen Prozessor zum Implementieren des Verfahrens nach Anspruch 1.

4. Ein Computer-Programm-Produkt, das Anweisungen speichert, die wenn sie von einem Computer ausgeführt werden, der mit einer ersten NFC Vorrichtung verknüpft ist, das Verfahren zum Erkennen einer Bedingung, die ein Laden der zweiten NFC-Vorrichtung durch ein elektromagnetisches Feld stört nach Anspruch 1 implementieren.

5. Verfahren nach Anspruch 1, Schaltung nach Anspruch 2, Vorrichtung nach Anspruch 3 oder Programm-Produkt nach Anspruch 4, wobei die Schwellenwerte (MHTH, MLTH, PHTH, PLTH) während des Ladens der Batterie (3) der zweiten Vorrichtung (2) mehrmals pro Sekunde angepasst werden.

6. Verfahren nach Anspruch 1 oder 5, Schaltung nach Anspruch 2 oder 5, Vorrichtung nach Anspruch 3 oder 5 oder Programm-Produkt nach Anspruch 4 oder 5, wobei das Fenster (MSW, PSW) ein gleitendes Fenster als Funktion eines Mittelwerts mehrerer Messwerte des Betrags oder der Phase ist.

7. Verfahren oder Schaltung oder Vorrichtung oder Programm-Produkt nach Anspruch 6, wobei der Mittelwert zwischen 5 und 50, vorzugsweise zwischen 10 und 20 Werten berücksichtigt wird.

8. Verfahren nach einem der Ansprüche 1, 5 bis 7, oder Schaltung nach einem der Ansprüche 2, 5 bis 7, oder Vorrichtung nach einem der Ansprüche 3, 5 bis 7, oder Programm-Produkt nach einem der Ansprüche 4 bis 7, wobei die erste Vorrichtung (1) das Laden stoppt, wenn der aktuell gemessene Betrag das Betragsfenster (MSW) der Schwellenwerte (MHTH, MLTH) verlässt oder wenn die aktuell gemessene Phase das Phasenfenster (PSW) der Schwellenwerte (PHTH, PLTH) verlässt.

9. Verfahren nach einem der Ansprüche 1, 5 bis 8, oder Schaltung nach einem der Ansprüche 2, 5 bis 8, oder Vorrichtung nach einem der Ansprüche 3, 5 bis 8, oder Programm-Produkt nach einem der Ansprüche 4 bis 8, wobei ein Vollladezustand bei fehlender Veränderung der Schwellenwerte (MHTH, MLTH, PHTH, PLTH) über eine ausgewählte Dauer validiert wird.

10. Verfahren nach einem der Ansprüche 1, 5 bis 9, oder Schaltung nach einem der Ansprüche 2, 5 bis 9, oder Vorrichtung nach einem der Ansprüche 3, 5 bis 9, oder Programm-Produkt nach einem der Ansprüche 4 bis 9, wobei außerhalb von Ladeperioden die Anpassung der Schwellenwerte während Übertragungspulsen (12) zwischen Standby-Phasen der ersten Vorrichtung (1) durchgeführt wird.

11. Verfahren oder Schaltung oder Vorrichtung oder Programm-Produkt nach Anspruch 10, wobei die erste Vorrichtung (1) in einen Betriebsmodus zum Senden einer Abrufsequenz wie in dem NFC-Forum-Standard definiert umschaltet, wenn eine zweite Vorrichtung (2) in Reichweite erkannt wird.

## Claims

1. Detection method, by a first NFC device (1) generating an electromagnetic field for charging a battery (3) of a second NFC device (2), of a disruptive condition of a charging of the second device, wherein two thresholds (MHTH, MLTH) defining a magnitude window (MSW) and/or two thresholds (PHTH, PLTH) defining a phase window (PSW), of a signal across the terminals of an oscillating circuit for generating a charge electromagnetic field, are adjusted in real time during the charge, the disruptive condition being:
an appearance of a foreign object (FO) in the field generated by the first device (1);
a departure of the second device (2) from the field generated by the first device (1); or
a full charge situation of the battery (3) of the second device (2).

2. Circuit for detecting a condition disrupting charging, by a first NFC device (1), of a battery (3) of a second NFC device (2) by electromagnetic field, including elements for adjusting, during the charging, two thresholds (MHTH, MLTH) defining a magnitude window (MSW) and/or two thresholds (PHTH, PLTH) defining a phase window (PSW), of a signal across the terminals of an oscillating circuit for generating a charge electromagnetic field, the disruptive condition being:
an appearance of a foreign object (FO) in the field generated by the first device (1);
a departure of the second device (2) from the field generated by the first device (1); or
a full charge situation of the battery (3) of the second device (2).

3. NFC device (1) including a circuit according to claim 2 and/or a processor for implementing the method according to claim 1.

4. Computer program product storing instructions which when they are executed by a computer associated to a first device NFC, implement the method for detecting a condition disrupting of a charging of the second NFC device according to claim 1.

5. The method according to claim 1, or circuit according to claim 2, or device according to claim 3, or computer program product according to claim 4, wherein the thresholds (MHTH, MLTH, PHTH, PLTH) are adjusted several times per second during the charging of the battery (3) of the second device (2).

6. Method according to claim 1 or 5, or circuit according to claim 2 or 5, or device according to claim 3 or 5, or program product according to claim 4 or 5, wherein said window (MSW, PSW) is a sliding window as a function of an average of several measured values of the magnitude or the phase.

7. Method, or circuit, or device, or program product according to claim 6, wherein the average takes into account between 5 and 50, preferably between 10 and 20 values.

8. Method according to any one of claims 1, 5 to 7, or circuit according to any one of claims 2, 5 to 7, or device according to any one of claims 3, 5 to 7, or program product according to any one of claims 4 to 7, wherein the first device (1) stops the charging if the current measured magnitude leaves the magnitude threshold (MHTH, MLTH) window (MSW) or if the current measured phase leaves the phase threshold (PHTH, PLTH) window (PSW).

9. Method according to any one of claims 1, 5 to 8, or circuit according to any one of claims 2, 5 to 8, or device according to any one of claims 3, 5 to 8, or program product according to any one of claims 4 to 8, wherein a full charge situation is validated in case of lack of variation of the thresholds (MHTH, MLTH, PHTH, PLTH) over a selected duration.

10. Method according to any one of claims 1, 5 to 9, or circuit according to any one of claims 2, 5 to 9, or device according to any one of claims 3, 5 to 9, or program product according to any one of claims 4 to 9, wherein, outside charging periods, the adjustment of the thresholds is performed during transmission bursts (12) between standby phases of the first device (1).

11. Method, or circuit, or device, or program product according to claim 10, wherein the first device (1) switches to an operating mode for transmitting a polling sequence as defined by the NFC Forum standard when a second device (2) is detected within range.
